Europäisches Patentamt

European Patent Office

Office européen des brevets

(19)

(11) Numéro de publication: **0 245 175 B1**

(12) **FASCICULE DE BREVET EUROPEEN**

(45) Date de publication du fascicule du brevet:
07.02.90

(21) Numéro de dépôt: **87401027.5**

(22) Date de dépôt: **06.05.87**

(51) Int. Cl.⁴: **C03B 23/03, C03B 23/035**

(54) **Procédé de bombage de feuilles de verre en vue de la fabrication de vitrages feuilletes.**

(30) Priorité: **06.05.86 DE 3615225**

(43) Date de publication de la demande:
**11.11.87 Bulletin 87/46**

(45) Mention de la délivrance du brevet:
**07.02.90 Bulletin 90/6**

(84) Etats contractants désignés:
**BE CH DE ES FR GB IT LI SE**

(56) Documents cités:
**EP-A- 0 005 306
EP-A- 0 169 770
FR-A- 2 046 790
FR-A- 2 468 557
US-A- 4 661 139**

(73) Titulaire: **SAINT-GOBAIN VITRAGE, "Les Miroirs" 18, avenue d'Alsace, F-92400 Courbevole(FR)**
(84) Etats contractants désignés: **BE CH ES FR GB IT LI SE**

(73) Titulaire: **VEGLA VEREINIGTE GLASWERKE, Viktoriaallee 3-5, D-5100 Aachen(DE)**
(84) Etats contractants désignés: **DE**

(72) Inventeur: **Vanaschen, Luc, Binsterweg , 113, B-4700 Eupen(BE)**
Inventeur: **Kuster, Hans-Werner, Schervierstrasse 20, D-5100 Aachen(DE)**
Inventeur: **Radermacher, Herbert, Belven 118, B.Raerem(BE)**
Inventeur: **Scharzenberg, Norbert, Wendelinsstrasse 45, D-5120 Herzogenrath(DE)**

(74) Mandataire: **Leconte, Jean-Gérard et al, Saint-Gobain Recherche 39, Quai Lucien Lefranc, F-93304 Aubervilliers Cedex(FR)**

## Description

L'invention a trait à l'obtention de vitrages feuilletés bombés, à deux feuilles ou plus de verre liées les unes aux autres par une couche adhésive en matière plastique. Elle concerne plus particulièrement un procédé de bombage de feuilles en verre silicaté, en vue de la réalisation d'un vitrage feuilleté bombé, selon lequel les feuilles de verre sont échauffées individuellement jusqu'à la température de bombage dans un four traversant puis sont bombées individuellement à l'aide d'une forme de bombage pleine.

Le procédé le plus connu de bombage de feuilles de verre en vue de la röalisation de vitrages feuilletés, par exemple des pare-brise de sécurité pour véhicules automobiles, consiste à poser les unes sur les autres les feuilles de verre prévues pour un feuilletage - usuellement au nombre de deux - et à les conduire, reposant sur une forme périphérique de bombage, au travers d'un four de réchauffage dans lequel elles épousent les contours de la forme sous l'action de leur propre poids, après avoir atteint la température de bombage. Ce procédé présente deux principaux inconvénients: de cette manière il n'est pas possible d'obtenir des formes de feuilles compliquées et d'autre part, les feuilles de verre ainsi bombées présentent un bombage transversal plus ou moins fort ce qui signifie qu'elles sont bombées dans les deux directions du plan.

Pour éviter ces inconvénients, il est aussi connu de bomber les feuilles de verre du feuilletage à la forme souhaitée au moyen d'une presse. Selon la publication de DE-B 1 192 373, les deux feuilles de verre sont amenées et bombées ensemble entre les deux formes d'une presse de bombage, constituée en règle générale d'une forme de bombage pleine pour l'outil convexe et d'un cadre pour l'outil de bombage concave. Ce procédé présent l'inconvénient d'un refroidissement différent sur la face des feuilles de verre venant au contact avec les formes de bombage; de ce fait les deux feuilles de verre se déforment différemment et se détachent l'une de l'autre le long des brds. Cette déformation non congruente ne peut pas être totalement éliminée par la suite.

Il a été également proposé de bomber les feuilles de verre une à une, puis de les refroidir individuellement avant de les assembler. Selon DE-A 192 911, les feuilles de verre sont suspendues à des pinces et bombées entre les formes d'une presse de bombage. La partie pré-caractérisante de la revendication 1 est connue de ce document. Selon FR-A 2 046 790, les feuilles de verre sont vomvées en position horizontale par application contre une surface en forme, trempées au moins partiellement de manière à les empêcher de changer de forme puis sont ensuite réunies pour être feuilletées. En pratique, on constate que quelques soient les performances des dispositis de cintrage, il existe toujours une petite différence entre les deux feuilles obtenues. On n'obtient pas une forme parfaitement congruente car la plus petite différence dans les conditions de refroidissement après le processus de bombage, conduit à des déformations qui rendent les feuilles de verre impropres à la réalisation d'un vitrage feuilleté.

L'invention a pour objectif un procédé de bombage par pressage de feuilles de verre tel que les feuilles soient formées avec une grande exactitude, d'une manière totalement congurente afin d'être utilisées avec un rendement élevé pour la fabrication de vitrages feuilletés.

A partir d'un procédé selon lequel la feuille de verre est öchauffõe à sa température de bombage et bombée la feuille de verre est obtenu en position horizontale dans un four traversant, dans une station de bombage prolongeant le four d'échauffement les feuilles de verre sont tour à tour soulevées au-dessus de la bande transporteuse par un courant gazeux chaud dirigé du bas contre la feuille de verre et sont pressées contre une forme de bombage disposée au-dessus de la bande transporteuse; la première feuille de verre ainsi bombée reste dans une position d'attente, à la température de bombage, avec soutien de sa forme et après le bombage par pressage d'une seconde feuille de verre, les deux feuilles de verre sont posées l'une sur l'autre, toujours à la température de bombage, sur un anneau de support correspondant à leur forme périphérique et sont ensemble refroidies.

L'invention consiste ainsi dans la combinaison de différentes étapes de procédé connues en soi. Elle provient de ce que dans un bombage par pressage de feuilles de verre, des conditions de bombage identiques pour les deux feuilles de verre sont atteintes et de plus l'invention tire profit de l'avantage qu'il y a à produire des paires de feuilles de verre bombées pour vitrages feuilletés avec un procédé de bombage par pressage selon lequel la feuille de verre n'est pas pressée contre une forme de bombage au moyen d'une contreforme rigide mais au moyen d'un courant d'air chaud. Il faut aussi souligner qu'après le bombage tour à tour des deux feuilles de verre, les deux feuilles, encore à la température de bombage, sont posées directement l'une sur l'autre et sont refroidies lentement ensemble; ainsi dans tous les cas, les écarts minimes entre les formes de deux feuilles se compensent et on obtient des feuilles de verre parfaitement congruentes.

Après son bombage par pressage, maintenant environ à sa température de bombage, la première feuille de verre reste dans une position d'attente, avec le soutien de sa forme. Dans un exemple de rélation de l'invention, la première feuille de verre est déposée après son bombage sur un anneau de soutien qui est amené, avec la feuille bombée, dans une cellule d'attente située à côté de la cellule de formage et qui revient se placer sous la forme de bombage après le bombage de la seconde feuille de verre alsors déposée sur la première feuille.

Il est entendu que ce procédé n'est pas limité à la production d'un vitrage feuilleté constitué par une paire de feuilles de verre. On peut aussi bien déposer une troisième feuille de verre bombée puis encore d'autres feuilles sur les deux feuilles bombées déjà soutenues par l'anneau et refroidir ensemble des feuilles déposées. Une telle mise en oeuvre permet l'obtention de vitrages feuilletés constitués de 3 feuilles de verre, placées sur un anneau de soutien commun pour le refroidissement. Par la suite, nous continuerons toutefois à utiliser cette expression "paire de feuilles de verre", même dans des cas impropres.

Selon une seconde variante de l'invention, le problème technique est résolu par les étapes suivantes: l'échauffement des feuilles de verre à la température de bombage a lieu en position horizontale, dans la cellule de bombage voisine du four traversant, la première feuille de verre est soulevée au-dessus de la bande transporteuse par un courant gazeux chaud dirigé du bas contre la feuille de verre et est pressée contre la forme de bombage disposée au-dessus de la bande transporteuse, après son bombage, la première feuille est maintenue par succion au contact de la surface en forme de la forme de bombage, la seconde feuille de verre est alors bombée par pressage contre la première feuille de verre au moyen du courant gazeux, sous la forme de bombage on indtroduit un anneau de soutien correspondant à la forme périphérique, en maintenant le courant gazeux, on dépose ensemble les deux feuilles de verre pressées l'une sur l'autre sur l'anneau de soutien.

Dans cette variante de l'invention, l'étape de maintien dans une position d'attente de la feuille en premier lieu bombée consiste à laisser cette première feuille, après son bombage, au contact de la surface de la forme de bombage, le bombage de la seconde feuille de verre étant obtenu par pressage contre la face inférieure de la feuille déjà bombée, les deux feuilles de verre pressées l'une contre l'autre étant déposées ensemble sur l'anneau de soutien.

Pour le maintien de la première feuille de verre au contact de la forme de bombage, la forme de bombage est munie d'orifices d'aspiration reliés à une pompe à dépression de manière à ce que la feuille de verre reste en position par effet de succion. Selon les cas, le même résultat peut être obtenu par une surpression gazeuse dirigée contre la face inférieure de la feuille de verre, les courants gazeux chauds maintenant la feuille de verre dans cette position étant contrôlés d'une manière telle qu'ils ne gênent pas le chemin de la seconde feuille de verre de son entrée dans la cellule de bombage à sa position finale au-dessous de la première feuille de verre.

D'autres détails et avantages de l'invention sont indiqués par les caractéristiques des sous-revendications et ressortent de la description des deux modes de réalisation du procédé selon l'invention, faite en référence aux dessins annexés qui représentent :

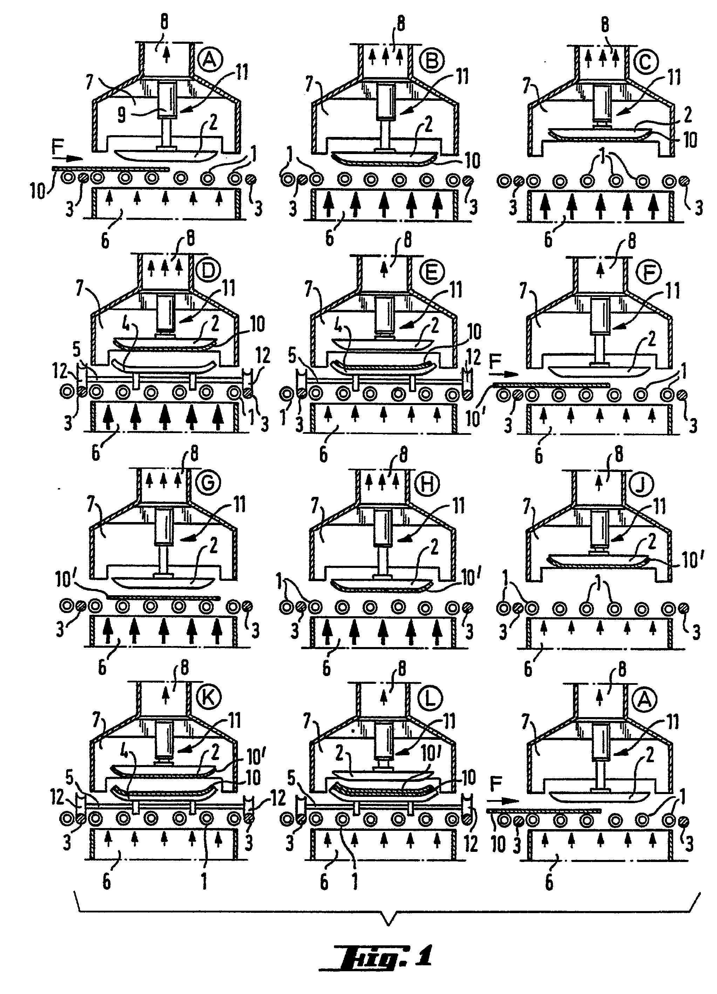

. figure 1 : une représentation schématique du déroulement du procédé dans un premier mode de réalisation,

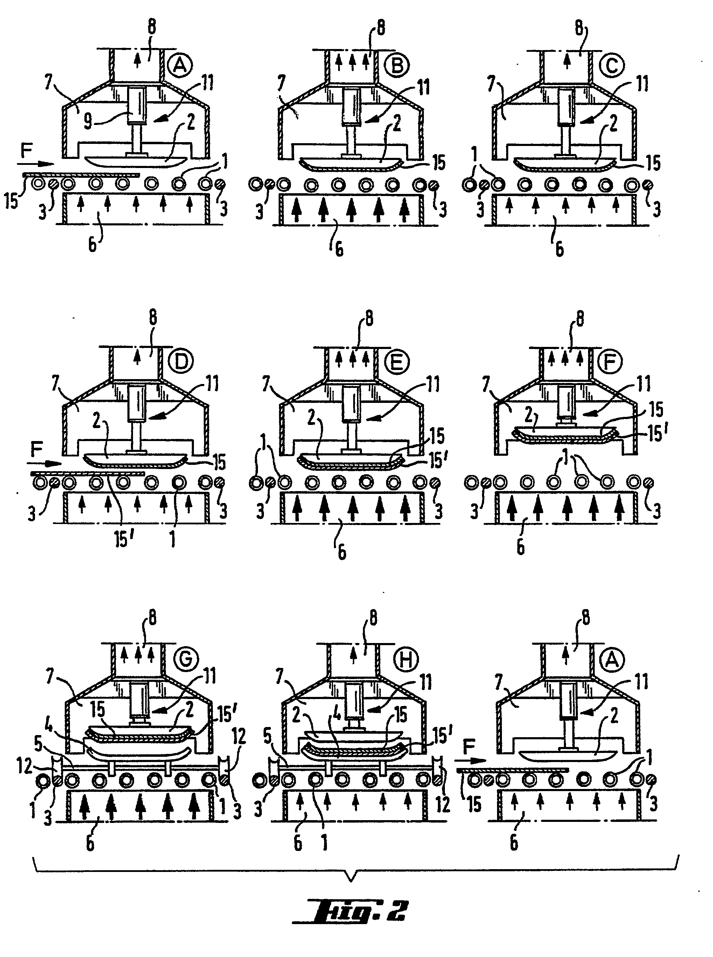

. figure 2 : une représentation schématique du déroulement du procédé dans un second mode de réalisation,

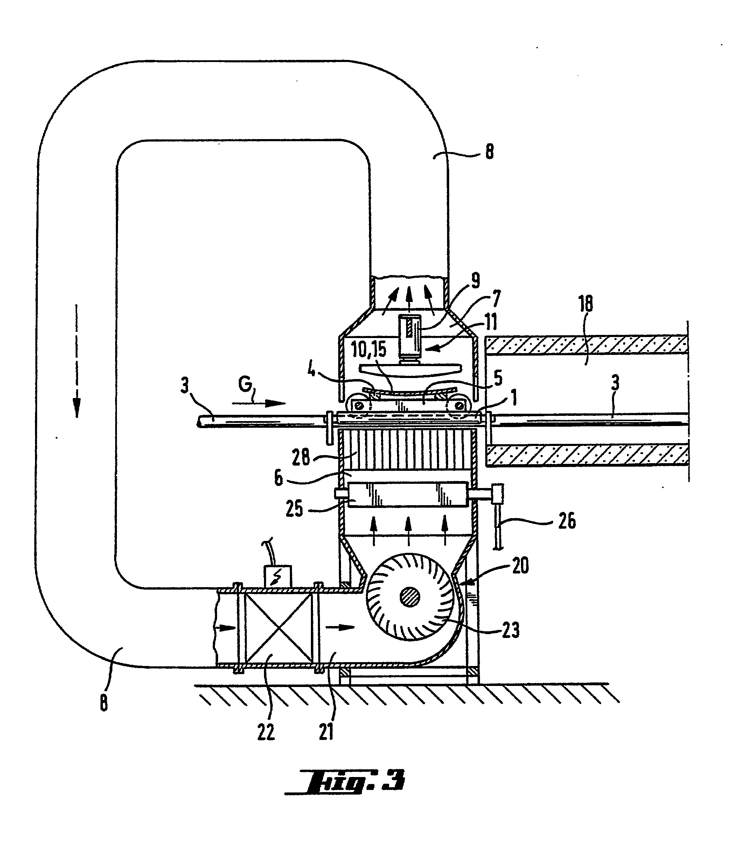

. figure 3 : un dispositif propre à la mise en oeuvre du procédé selon l'invention.

La figure 1 montre les différentes étapes successives de la première forme de réalisation du nouveau procédé, sous la forme de coupes verticales de la cellule de formage.

Les éléments essentiels de la cellule de bombage sont un convoyeur horizontal à rouleaux 1, une forme de bombage pleine 2 disposée au centre de la cellule de formage, au-dessus du convoyeur 1, des rails 3 perpendiculaires à la direction de transport du convoyeur 1 et sur lesquels se déplace un chariot 5 portant un anneau de soutien 4 correspondant à la forme de la feuille de verre bombée, un conduit vertical 6, disposé sous le convoyeur 1, depuis lequel un courant de gaz chaud - en particulier de l'air chaud, est dirigé vers le haut verticalement, entre les rouleaux de transport du convoyeur 1 et enfin une hotte 7 fermant vers le haut la cellule de bombage et dans laquelle débouche une canalisation 8 qui par un circuit fermé renvoie l'air chaud vers le conduit vertical 6. La température, le volume du courant gazeux et la pression du gaz chaud sont réglables dans les limites nécessaires. La pression et le volume du courant gazeux sont notamment ramenées d'une valeur basse à une valeur haute et inversement par exemple au moyen d'un volet de réglage. Pour une feuille de verre à bomber 10 d'une épaisseur de 3 mm, la valeur supérieure de la pression peut s'élever par exemple à 40 mm de colonne d'eau. Cela suffit pour faire décoller la feuille du convoyeur 1 et la presser contre la forme de bombage 2 dont elle prend la forme en épousant son contour sous l'action de la pression du gaz. La valeur inférieure de la pression peut s'élever à 8 mm de colonne d'eau. Cette valeur est maintenue lorsque la feuille 10 circule sur le convoyeur 1 dans la cellule de formage et lorsque la feuille 10 est déposée puis repose sur l'anneau de soutien 4.

Les moyens de production d'un courant d'air chaud tel que celui nécessaire à la mise en oeuvre du procédé selon l'invention sont décrits en détail dans la publication de brevet DE-A 3 523 675.

La feuille de verre 10 est échauffée à la température de bombage dans un four ici non représenté muni d'un convoyeur à rouleaux ou d'un autre système de soutien et de transport de feuilles de verre en position horizontale, et est transportée dans la cellule de bombage dans le sens de la flèche F, au moyen des rouleaux en mouvement du convoyeur 1 (Position A). Pendant cette opération de transport, le courant d'air chaud (environ 650°C) produit une pression d'environ 8 mm de colonne d'eau qui agit depuis le bas contre la feuille de verre 10 et compense en partie son poids. De cette manière sont évitées les déformations de la feuille de verre qui peuvent venir d'un affaissement entre les rouleaux de portions de la feuille en raison du poids de la feuille. D'un autre côté, la part du poids de la feuille de verre supportée par les rouleaux 1 suffit à obtenir un frottement qui assure le transport. La forme de bombage 2, fixée à un dispositif porteur 11 approprié, est placée en position basse, c'est-à-dire à une distance relativement faible de la feuille de verre 10. La feuille 10 est placée dans la chambre de bombage dans une position telle qu'elle repose exactement sous la forme de bombage 2.

Directement après le positionnement de la feuille sous la forme de bombage 2, la pression du courant d'air chaud est élevée à environ 40 mm de colonne d'eau. De ce fait, la feuille de verre 10 est soulevée au-dessus des rouleaux et est pressée contre la forme de bombage 2 avec une pression douce et uniforme. Cette étape du procédé est représentée à la position B.

A présent, la forme de bombage 2 -et la feuille de verre 10- est relevée (position C) suffisamment pour qu'un chariot 5 avec l'anneau de soutien 4 puisse être amenée sur les rails 3 dans la cellule de bombage, sous la feuille de verre (position D).

Le chariot 5 dont les roues 12 roulent sur les rails 3 est positionnée dans la cellule de bombage de manière à ce que l'anneau de soutien se trouve exactement sous la feuille de verre.

Ensuite, la feuille de verre 10 - qui jusqu'à cet instant est maintenue au contact de la forme de bombage 2 par la forte pression d'environ 40 mm de colonne d'eau - est déposée sur l'anneau de soutien 4 (position E). Pour cette dépose de la feuille de verre 10 sur l'anneau de soutien 4, la pression du courant gazeux chaud est réduite à environ 8 mm de colonne d'eau de manière à ce que la feuille 10 ne tombe pas d'un coup sur l'anneau de soutien 4 mais se pose dessus lentement. Selon les cas, la forme de bombage 2 peut être plus ou moins abaissée. Dès que la feuille de verre 10 repose sur l'anneau de soutien 4, le chariot 5 est conduit en dehors de la cellule de bombage, dans une cellule d'attente attenante à la cellule de bombage. Dans cette position d'attente ici non représentée, la feuille de verre peut être soutenue par un courant d'air chaud ascendant afin d'éviter un bombage transversal de la feuille sous l'effet de son propre poids. La température dans cette position d'attente doit être maintenue faiblement inférieure à la température de bombage.

Quand le chariot 5 avec la feuille de verre 10 se trouve en position d'attente (position F), la pression du gaz dans la chambre de bombage reste à son niveau inférieur et la seconde feuille de verre 10' pénètre alors dans la station de bombage. Dans ce temps, la forme de bombage 2 passe à nouveau en position inférieure, légèrement au-dessus de la feuille 10'.

En position G, la feuille 10' a atteint son exacte position finale et à ce moment, la pression du gaz est à nouveau amenée à sa valeur supérieure d'environ 40 mm de colonne d'eau. A la suite de cette élévation de la pression, la feuille 10' est soulevée au-dessus des rouleaux du convoyeur et s'appuie contre la forme de bombage pleine 2.

La forme de bombage 2 est munie sur sa face inférieure d'orifices d'aspiration qui sont en liaison avec une pompe à dépression. La pression du gaz dans le conduit 6 est ramenée à sa valeur inférieure d'environ 8 mm de colonne d'eau et la feuille 10' est dès lors tenue à la forme de bombage 2 par effet de succion (position J).

Pendant ce temps, le chariot 5 - avec la feuille 10 en premier lieu bombée reposant sur l'anneau de soutien - retourne de la cellule d'attente dans la cellule de bombage. A l'instant représenté en position K, la feuille 10 a atteint sa position extrême, exactement sous la feuille 10'.

La forme de bombage 2, avec la feuille 10', est alors abaissée. Quand la feuille 10' atteint sa position juste au-dessus de la feuille 10, la dépression et donc l'effet de succion dans la forme de bombage 2 sont supprimés et la feuille 10' se pose sur la feuille 10 (position L). Selon les cas, la hauteur depuis laquelle la feuille 10' est lachée de la forme de bombage 2 peut être choisie d'une manière telle que la feuille 10' tombe avec une plus ou moins grande énergie cinétique sur la feuille 10 et s'applique correctement sur cette feuille inférieure.

Le chariot 5 avec la paire de feuilles de verre 10, 10' est enfin conduit sur les rails 3 dans un four de recuisson dans lequel la paire de feuilles est refroidie lentement d'une manière connue. Pendant ce temps, la feuille 10 suivante pénètre dans la cellule de bombage et le cycle de bombage suivant recommence en position A.

Pour la forme de réalisation du nouveau procédé représentée à la figure 2, le dispositif décrit à l'aide de la figure 1 est à nouveau utilisé ; la forme de bombage 2 présente une surface munie d'orifices d'aspiration reliés à une pompe à dépression. La formation d'une forme de bombage 2 est en soi connue et pour simplifier, les éléments du dispositif nécessaires à l'obtention de l'effet de succion n'ont pas été représentés à la figure 2.

Le cycle du procédé commence en position A, dans laquelle la feuille de verre 15 pénètre sur les rouleaux de transport 1 en mouvement dans la cellule de bombage. A l'aide de moyens appropriés et connus en eux-mêmes, la feuille 15 est positionnée sous la forme de bombage 2. Pendant cette opération de transport et de positionnement, la pression du gaz dans le conduit de circulation 6 est maintenue à une valeur d'environ 8 mm de colonne d'eau ce qui donne un délestage du poids et évite une déformation de la feuille entre les rouleaux de transport.

Dès que la feuille 15 a atteint sa position extrême dans la cellule de bombage dans le conduit 6, la pression du gaz chaud - qui présente une température de l'ordre de 650°C - est élevée d'un coup à 40 mm de colonne d'eau (position B). De ce fait, la feuille 15 décolle des rouleaux de transport et est pressée contre la forme de bombage 2 où elle prend la forme souhaitée grâce à la forme de bombage 2.

A ce moment ou peu avant celui-ci, la forme de bombage 2 est connectée à la pompe à dépression de sorte que la feuille de verre 15 est fixée à la forme de bombage 2 par effet de succion. La pression du gaz dans le conduit 6 est à nouveau ramenée à une valeur basse d'environ 8 mm de colonne d'eau. Cet état correspond à la position C de la figure 2.

Tandis que la feuille 15 reste dans cette position d'attente contre la forme 2, la seconde feuille de la paire pénètre dans la cellule de bombage (position D). La pression du courant de gaz chaud dans le conduit 6 est pendant ce temps maintenue à sa valeur basse d'environ 8 mm de colonne d'eau et la feuille 15 est correctement positionnée sous la forme de bombage.

A l'étape suivante du procédé (position E), la pression du gaz chaud est une nouvelle fois élevée d'un coup à environ 40 mm de colonne d'eau. Sous l'effet de cette pression, la feuille de verre 15' décolle des rouleaux de transport 1, est pressée contre la face inférieure de la feuille 15 se trouvant contre la forme de bombage et s'assemble sur toute sa surface avec cette feuille 15.

Au stade suivant, représenté en position F, la pression du courant gazeux chaud est maintenue à sa valeur supérieure de manière à ce que la feuille 15' reste en contact avec la feuille 15 et la forme de bombage 2 avec les deux feuilles 15, 15' est déplacée en position supérieure. A ce moment, sur les rails 3 on introduit dans la cellule de bombage, un chariot 5 portant un anneau de soutien 4 correspondant à la forme des feuilles qui est positionné de manière à ce que l'anneau de soutien soit situé exactement sous les bords des feuilles 15, 15' (position G).

Pendant cette étape du procédé, la pression élevée du courant gazeux chaud est maintenue.

Dès que l'anneau de soutien 4 a atteint la position adéquate, la forme de bombage 2 est abaissée juste au-dessus de l'anneau 4. Puis on stoppe la dépression dans la forme de bombage 2 et la pression du gaz dans le conduit 6 est abaissée à sa valeur inférieure (position H). Par la réduction de la pression du gaz, la paire de feuilles de verre 15 et 15' se pose doucement sur l'anneau de soutien 4. Le chariot 5, et les feuilles 15, 15' ressortent de la station de bombage pour entrer dans le four de recuisson situé à côté de celles-ci dès que la forme de bombage 2 est relevée.

Le cycle de bombage est alors achevé. La forme de bombage 2 passe à nouveau en position inférieure et la cellule de bombage est maintenant prête pour la prise en charge d'une nouvelle feuille de verre 15 et le cycle redémarre en position A.

A la figure 3 est représenté l'ensemble d'installation nécessaire à la mise en oeuvre du procédé selon l'invention. L'élément essentiel de l'installation est la cellule de bombage avec la forme de bombage 2 montée mobile verticalement au moyen d'un mécanisme schématisé par un piston 9. Les rouleaux de transport 1 forment le système de convoyage sur lequel les feuilles traversent un four tunnel ici non représenté, dans lequel elles sont échauffées à la température de bombage puis transportées dans la cellule de bombage qui prolonge le four.

Perpendiculairement à la direction de transport du système de convoyage formés par les rouleaux de transport 1, des rails 3 sont disposés dans la cellule de bombage ; ces rails 3 conduisent à un four de recuisson 18 dans lequel sont lentement refroidies les feuilles de verre bombées. Sur ces rails 3, les chariots 5 de transport vides sont introduits dans la cellule de bombage dans la direction de la flèche G. Après la traversée du four de recuisson 18, les chariots 5 sont renvoyés dans la cellule de bombage pour un nouveau cycle.

D'une manière connue, la forme de bombage 2 est une forme aspirante connectée à une pompe à dépression de manière à ce que la feuille de verre soit fixée contre la surface de la forme. Pour éviter de surcharger la figure, les moyens nécessaires n'ont pas été représentés.

Sous la forme de bombage est disposé le conduit 6, orienté verticalement, grâce auquel le courant d'air chaud est dirigé du bas contre la feuille de verre. Le courant d'air chaud est collecté au-dessus de la forme de bombage par la hotte 7 et est renvoyé vers le conduit dans un cycle fermé par la canalisation 8. Pour la production du volume gazeux nécessaire et de la pression nécessaire sert un ventilateur à flux transversal 20. Au travers du canal d'admission rectangulaire 21 est intercalé un registre de chauffe électrique 22, avec lequel le courant d'air est chauffé à la température nécessaire pour le procédé (550-700°C). Dans le conduit 6, au-dessus de la turbine 23 du ventilateur à flux transversal, sont disposés des volets de réglage 25. A l'aide de ces volets, le volume - et par là la pression efficace du courant d'air chaud - peut être réglé soit à une valeur inférieure ajustable soit à une valeur supérieure elle-aussi ajustable. L'inversion basse-haute pression et inversement est obtenue à l'aide du levier 26 actionné par un dispositif de commande approprié. Au-dessus des volets 25 sont disposés, orientés verticalement, des déflecteurs verticaux 28 qui assurent une répartition uniforme du courant gazeux.

**Revendications**

1. Procédé pour le bombage de feuilles de verre (10, 10') prévues pour la fabrication de vitrages feuilletés selon lequel les feuilles de verre sont échauffées tour à tour à la température de bombage dans un four traversant, sont bombées individuellement au moyen d'une forme (2) pleine de bombage par pressage et sont ultérieurement liées les unes aux autres par une couche adhésive en matière plastique, caractérisé en ce que:
   – l'échauffement des feuilles (10, 10') de verre à la température de bombage a lieu en position horizontale, dans la cellule de bombage (7) voisine du four traversant, la première feuille de verre (10) respective d'une paire de feuilles (10, 10') est soulevée au-dessus de la bande transporteuse (1) par un courant gazeux (6) chaud dirigé du bas conte la feuille de verre (10) et est pressée contre la forme de bombage (2) disposée au-dessus de la bande transporteuse (1),
   – après son bombage, la première feuille de verre (10) est maintenue environ à la température de bombage dans une position d'attente, avec le soutien de sa forme, la seconde feuille de verre (10') est bombée de la même façon que la première feuille (10),
   – les deux feuilles de verre (10, 10') sont déposées l'une sur l'autre, à la température de bombage, sur un anneau de soutien (4) correspondant à la forme périphérique et sont ensemble refroidies.

2. Procédé selon la revendication 1, caractérisé en ce qu'après l'opération de bombage, la première feuille (10) est posée sur un anneau de soutien (4) qui est conduit, avec la feuille bombée (10) dans une position d'attente à côté de la cellule de bombage et qu'après le bombage de la feuille suivante (10'), l'anneau de soutien (4) est à nouveau conduit dans la cellule de bombage, sous la forme de bombage (2) et la seconde feuille (10') – placée au contact de la forme de bombage (2) – est posée sur la feuille (10) bombée en premier lieu.

3. Procédé selon la revendication 2, caractérisé en ce que la pose de la feuille bombée (10, 10') sur l'anneau de soutien (4) ou sur une feuille (10) auparavant bombée s'effectue alors que la forme de bombage (2) est en position basse.

4. Procédé selon l'une des revendications 2 ou 3, caractérisé en ce que pour l'obtention d'un vitrage feuilleté constitué par plus de deux feuilles de verre, l'anneau de soutien (4) – avec deux feuilles de verre ou plus -passe dans une position d'attente après le bombage et de là, est ramené une nouvelle fois dans la chambre de bombage pour récupérere la feuille suivante bombée.

5. Procédé pour le bombage de feuilles de verre (15, 15') prévues pour la fabrication de vitrages feuilletés selon lequel les feuilles de verre sont échauffées tour à tour à la température de bombage dans un four traversant, sont bombées individuellement au moyen d'une forme (2) pleine de bombage par pressage et sont ultérieurement liées les unes aux autres par une couche adhésive en matière plastique, caractérisé en ce que:

– l'échauffement des feuilles (15, 15') de verre à la température de bombage a lieu en position horizontale,

– dans la cellule de bombage (7) voisine du four traversant, la première feuille de verre (15) est soulevée au-dessus de la bande transporteuse (1) par un courant gazeux (6) chaud dirigé du bas contre la feuille de verre (15) et est pressée contre la forme de bombage disposée au-dessus de la bande transporteuse (1),

– après son bombage, la première feuille (15) est maintenue par succion au contact de la surface en forme de la forme de bombage (2),

– la seconde feuille de verre (15) est alors bombée par pressage contre la première feuille de verre (15) au moyen du courant gazeux (6),

– sous la forme de bombage (2) on introduit un anneau de soutien (4) correspondant à la forme périphérique, en maintenant le courant gazeux (6),

– on dépose ensemble les deux feuilles de verre (15, 15') pressées l'une sur l'autre sur l'anneau de soutien (4).

6. Procédé selon l'une des revendications 1 à 5, caractérisé en ce qu'après la pose de la ou des feuilles (10, 10', 15, 15') sur l'anneau de soutien (4), le volume et la pression du courant gazeux chaud (6) sot maintenus à des valeurs telles qu'une partie du poids de la feuille soit supportée par la pression du gaz.

## Patentansprüche

1. Verfahren zum Biegen von für die Herstellung von Verbundglasscheiben vorgesehenen Glasscheiben (10, 10') bei dem die Glasscheiben in einem Durchlaufofen einzeln auf Biegetemperatur erwärmt, mit Hilfe einer vollflächigen Biegeform (2) einzeln durch Pressen gebogen und später durch eine Klebeschicht aus Kunststoff miteinander verbunden werden, dadurch gekennzeichnet, daß

– die Erwärmung der Glasscheiben (10, 10') auf Biegetemperatur in horizontaler Lage erfolgt,

– in der neben dem Durchlaufofen angeordneten Biegestation (7) jeweils die erste Glasscheibe (10) eines Glasscheibenpaares (10, 10') durch einen von unten gegen die Glasscheibe (10) gerichteten heißen Gasstrom von der Transportbahn (1) abgehoben und gegen die oberhalb der Transportbahn (1) angeordnete Biegeform (2) gepreßt wird,

– die erste Glasscheibe (10) nach dem Biegen etwa bei Biegetemperatur unter Abstützung ihrer Form in einer Wartestellung gehalten und die zweite Glasscheibe (10') in derselben Weise wie die erste Glasscheibe (10) gebogen wird, und

– die beiden Glasscheiben (10, 10') bei Biegetemperatur auf einen ihrer Umfangsform entsprechenden Tragring (4) aufeinander abgelegt und gemeinsam abgekühlt werden.

2. Verfahren nach Anspruch 1, dadurch gekennzeichnet, daß die erste Glasscheibe (10) nach dem Biegevorgang auf einen Tragring (4) abgelegt, der Tragring mit der gebogenen Glasscheibe (10) in eine Warteposition neben der Biegestation verbracht, nach dem Biegen der nächsten Glasscheibe (10') der Tragring (4) wieder in die Biegestation unter die Biegeform (2) verbracht und die mit der Biegeform (2) in Kontakt stehende zweite Glasscheibe (10') auf die zuerst gebogene Glasscheibe (10) abgelegt wird.

3. Verfahren nach Anspruch 2, dadurch gekennzeichnet, daß das Ablegen der gebogenen Glasscheibe (10, 10') auf den Tragring (4) oder auf eine zuvor gebogene Scheibe (10) bei abgesenkter Position der Biegeform (2) erfolgt.

4. Verfahren nach einem der Ansprüche 2 oder 3, dadurch gekennzeichnet, daß zur Herstellung einer aus mehr als zwei Glasscheiben bestehenden Verbundglasscheibe der Tragring (4) – mit zwei oder mehr Glasscheiben – jeweils nach dem Biegen in eine Wartestellung verbracht und von da aus von neuem in die Biegekammer zurückverbracht wird, um die nächste gebogene Glasscheibe aufzunehmen.

5. Verfahren zum Biegen von für die Herstellung von Verbundglasscheiben vorgesehenen Glasscheiben (10, 10') bei dem die Glasscheiben in einem Durchlaufofen einzeln auf Biegetemperatur erwärmt, mit Hilfe einer vollflächigen Biegeform (2) einzeln durch Pressen gebogen und später durch eine Klebeschicht aus Kunststoff miteinander verbunden werden, dadurch gekennzeichnet, daß

– die Erwärmung der Glasscheiben (15, 15') auf Biegetemperatur in horizontaler Lage erfolgt,

– in der neben dem Durchlaufofen angeordneten Biegestation (7) jeweils die erste Scheibe (15) durch einen von unten gegen die Glasscheibe (15) gerichteten Gasstrom von der Transportbahn (1) abgehoben und gegen die oberhalb der Transportbahn (1) angeordnete Biegeform (2) gepreßt wird,

– die erste Scheibe (15) nach ihrem Biegen durch Ansaugen in Kontakt mit der Formfläche der Biegeform (2) gehalten wird,

– sodann die zweite Glasscheibe (15') durch Pressen gegen die erste Glasscheibe (15) mit Hilfe des Gasstroms (6) gebogen wird,

– bei Aufrechterhaltung des Gasstroms (6) ein der Umfangsform entsprechender Tragring (4) unter die Biegeform (2) verbracht, und

– die beiden aufeinandergepreßten Glasscheiben (15, 15') gemeinsam auf den Tragring (4) abgelegt werden.

6. Verfahren nach einem der Ansprüche 1 bis 5, dadurch gekennzeichnet, daß nach dem Ablegen der Glasscheibe oder der Glasscheiben (10, 10', 15, 15') auf den Tragring (4) das Volumen und der Druck des heißen Gasstroms (6) auf einen solchen Wert gehalten werden, daß ein Teil des Gewichts der Scheibe von dem Gasdruck getragen wird.

**Claims**

1. A method of bending sheets of glass (10, 10') intended for the production of laminated panes, according to which the glass sheets are heated in turn to the bending temperature in a once-through furnace, are individually bent by means of a solid bending mould (2) by pressing and are later bonded to one another by an adhesive layer of plastics material, characterized in that:

– the heating of the glass sheets (10, 10') to the bending temperature takes place in a horizontal position,

– in the bending cell (7) adjacent to the once-through furnace, the first sheet of glass (10) of a pair of sheets (10, 10') is raised above the conveyor belt (1) by a hot gaseous current (6) directed from below against the sheet of glass (10) and is pressed against the bending mould (2), disposed above the conveyor belt (1),

– after its bending, the first sheet of glass (10) is kept approximately at the bending temperature in a waiting position, with the support of its mould, the second sheet of glass (10') is bent in the same manner as the first sheet (10),

– the two sheets of glass (10, 10') are deposited the one on the other, at the bending temperature, on a support ring (4) corresponding to the peripheral shape and are cooled together.

2. A method according to Claim 1, characterized in that, after the bending operation, the first sheet (10) is placed on a support ring (4) which is conducted, together with the bent sheet (10), into a waiting position alongside the bending cell and that, after the bending of the next sheet (10'), the support ring (4) is again brought into the bending cell, beneath the bending mould (2) and the second sheet (10')– placed in contact with the bending mould (2) – is placed on the sheet (10) which was first bent.

3. A method according to Claim 2, characterized in that the placing of the bent sheet (10, 10') on the support ring (4) or on a previously bent sheet (10) is carried out while the bending mould (2) is in a lower position.

4. A method according to one of Claims 2 or 3, characterized in that, for the production of a laminated pane composed of more than two glass sheets, the support ring (4) – with two or more sheets of glass – passes into a waiting position after the bending and from there is brought once again into the bending chamber for receiving the succeeding bent sheet.

5. A method of bending sheets of glass (15, 15') intended for the production of laminated panes, according to which the glass sheets are heated in turn to the bending temperature in a once-through furnace, are individually bent by means of a solid bending mould (2) by pressing and are later bonded to one another by an adhesive layer of plastics material, characterized in that:

– the heating of the glass sheets (15, 15') to the bending temperature takes place in a horizontal position,

– in the bending cell (7) adjacent to the once-through furnace, the first sheet of glass (15) is raised above the conveyor belt (1) by a hot gaseous current (6) directed from below against the sheet of glass (15) and is pressed against the bending mould disposed above the conveyor belt (1),

– after its bending, the first sheet (15) is held by suction in contact with the shaped surface of the bending mould (2),

– the second sheet of glass (15') is then bent by pressing against the first sheet of glass (15) by means of the gaseous current (6),

– beneath the bending mould (2) there is introduced a support ring (4) corresponding to the peripheral shape, the gaseous current (6) being maintained,

– the assembly of the two glass sheets (15, 15'), pressed against one another, is deposited on the support ring (4).

6. A method according to one of Claims 1 to 5, characterized in that, after the placing of the sheet or sheets (10, 10', 15, 15') on the support ring (4), the volume and the pressure of the hot gaseous current (6) are maintained at values such that a portion of the weight of the sheet is supported by the pressure of the gas.

**Fig. 1**

**Fig. 2**

*Fig. 3*